# EUROPEAN PATENT SPECIFICATION

(11) **EP 2 489 471 B1**
(45) Date of publication and mention of the grant of the patent: **11.05.2016**
(21) Application number: 10823410.5
(22) Date of filing: 13.10.2010
(51) Int. Cl.: B24C 5/02, B23P 17/00, B24C 9/00, B64C 1/00, B64C 1/06

(54) **STRINGER MANUFACTURING METHOD**
VERFAHREN ZUR HERSTELLUNG VON STRECKBALKEN
PROCÉDÉ DE FABRICATION DE LONGERON

(30) Priority: 14.10.2009 JP 2009237334
(43) Date of publication of application: 22.08.2012
(73) Proprietor: Mitsubishi Heavy Industries, Ltd., Tokyo 108-8215 (JP); Flow Japan Corporation, Shibuya-ku, Tokyo 150-6018 (JP)
(72) Inventor: KANAZAWA, Hiroyuki, Tokyo 108-8215 (JP); BABA, Yasuo, Tokyo 150-6018 (JP)
(74) Representative: Henkel, Breuer & Partner
(86) International application number: PCT/JP2010/067954
(87) International publication number: WO 2011/046142

(56) References cited:
- JP-A- 1 103 265
- JP-A- 2000 176 840
- JP-A- 2001 198 830
- JP-A- 2003 220 428
- JP-A- 2006 167 461
- US-A- 4 848 042
- US-A- 5 980 372

## Description

### {Technical Field}

The present invention relates to a manufacturing method for a stringer (longeron), for example, a stringer used as a reinforcing member for an aircraft main wing.

### {Background Art}

For stringers used as reinforcing members for aircraft main wings, for example, there is a known stringer made of carbon fiber reinforced plastic (CFRP) disclosed in JP 2003-53851A.

US 5980372B discloses a catcher assembly for an abrasive waterjet having a nozzle assembly for producing a high velocity fluid jet to cut a workpiece such as flanges of an I-beam and a deflector block to be arranged opposite the nozzle assembly and including an entry port for receiving the fluid jet.

### {Summary of Invention}

### {Technical Problem}

When a stringer used as a reinforcing member for an aircraft main wing is manufactured, it may be necessary to machine the wing tip portion thereof into a shape, for example, shown in Fig. 3 or Fig. 4 and to machine the wing root portion thereof into a shape, for example, shown in Fig. 6 or Fig. 8. However, a stringer made of carbon fiber reinforced plastic is very hard, and, therefore, it is very difficult to machine the stringer made of carbon fiber reinforced plastic with general machining, such as drilling or milling. In conventional technologies, to machine the wing tip portion or the wing root portion, first, a drill is used to make holes at desired positions on a cutoff line on the wing tip portion or the wing root portion, and a circular saw is moved along guiding jigs that are provided for each shape, so as to connect the holes.

Thus, there are problems in that the number of processes is increased, which deteriorates the productivity, and, when the circular saw is moved, carbon fiber reinforced plastic powder scatters about, which deteriorates the working environment of workers.

There is also a problem in that the blade of the drill or the teeth of the circular saw become blunt in a relatively short time, which increases the manufacturing costs.

The present invention has been made in view of the above-described circumstances, and an object thereof is to provide a stringer manufacturing method capable of enhancing the productivity, of improving the working environment of workers, and of reducing the manufacturing costs.

### {Solution to Problem}

The present invention provides a stringer manufacturing method as defined by claim 1, 2 or 3 in order to solve the above-described problems.

According to the present invention, there is provided a stringer manufacturing method for machining one end portion of an elongated member that is provided with a cap flange, a web, and a base flange and that has an inverted T-shape in a front view, an I-shape in a front view, or a T-shape in a front view into a desired shape to obtain a desired stringer, in which the one end portion of the elongated member is machined into a desired shape by using a vertical articulated robot that has at least 6 axes and that has, at the tip of an arm, an abrasive nozzle assembly that injects ultrahigh-pressure water containing abrasive and a catcher cup that recovers the ultrahigh-pressure water injected from the abrasive nozzle assembly.

According to the stringer manufacturing method of the present invention, one end portion of the elongated member is automatically machined into a desired shape by the vertical articulated robot that has at least 6 axes, without using tools (a drill, a circular saw, etc.) and guiding jigs, which are conventionally used.

Thus, it is possible to enhance the productivity, to improve the working environment of workers, and to reduce manufacturing costs.

Preferably, a space adjustment mechanism is provided that adjusts the space between the abrasive nozzle assembly and the catcher cup so as to maintain the space between the catcher cup and the elongated member constant.

According to the stringer manufacturing method of this embodiment, the distance between the catcher cup and the elongated member, more specifically, the distance between the inlet of the catcher cup and a surface of the elongated member, is kept (maintained) (substantially) constant.

Thus, it is possible to easily recover ultrahigh-pressure water containing abrasive, to produce a smooth machined surface, thus eliminating a finishing process, and to further enhance the productivity.

According to the stringer manufacturing method of the present invention, all of the ultrahigh-pressure water containing abrasive is recovered.

Thus, it is possible to maintain the moving speed (specifically, cutting speed) of the abrasive nozzle assembly and the catcher cup constant and to further enhance the productivity.

The above-described stringer manufacturing method of the invention in one embodiment includes the steps of: when the one end portion of the elongated member having the inverted T-shape in a front view is to be machined into a desired shape, cutting off a one-lateral-side portion of the cap flange and an upper end portion of the web that are located at the one end portion of the elongated member, after disposing the abrasive nozzle assembly and the catcher cup at one lateral side of the elongated member such that the abrasive nozzle assembly is located higher than the cap flange and the catcher cup is located lower than the cap flange, and disposing the abrasive nozzle assembly so as to be located closer to the central axis of the elongated member than the catcher cup is; cutting off an other-lateral-side portion of the cap flange and an upper end portion of the web that are located at the one end portion of the elongated member, after disposing the abrasive nozzle assembly and the catcher cup at the other lateral side of the elongated member such that the abrasive nozzle assembly is located higher than the cap flange and the catcher cup is located lower than the cap flange, and disposing the abrasive nozzle assembly so as to be located closer to the central axis of the elongated member than the catcher cup is; and cutting off a portion of the web that is located at the one end portion of the elongated member, after locating the catcher cup at one lateral side of the web, after locating the abrasive nozzle assembly at the other lateral side of the web, and disposing the abrasive nozzle assembly and the catcher cup such that the central axis thereof is parallel to an upper surface of the cap flange and a lower surface of the base flange.

According to this stringer manufacturing method, the distance between the abrasive nozzle assembly and the elongated member, more specifically, the distance between the outlet of the abrasive nozzle assembly and a surface of the elongated member, is kept (maintained) (substantially) constant.

Thus, it is possible to produce a smooth machined surface, thus eliminating a finishing process, and to further enhance the productivity.

The above-described stringer manufacturing method of the invention in another embodiment includes the steps of: when the one end portion of the elongated member having the I-shape in a front view is to be machined into a desired shape, cutting off a one-lateral-side portion of the base flange and a lower end portion of the web that are located at the one end portion of the elongated member, after disposing the abrasive nozzle assembly and the catcher cup at one lateral side of the elongated member such that the abrasive nozzle assembly is located lower than the base flange and the catcher cup is located higher than the base flange, and disposing the abrasive nozzle assembly so as to be located closer to the central axis of the elongated member than the catcher cup is; cutting off an other-lateral-side portion of the base flange and a lower end portion of the web that are located at the one end portion of the elongated member, after disposing the abrasive nozzle assembly and the catcher cup at the other lateral side of the elongated member such that the abrasive nozzle assembly is located lower than the base flange and the catcher cup is located higher than the base flange, and disposing the abrasive nozzle assembly so as to be located closer to the central axis of the elongated member than the catcher cup is; cutting off a portion of the web that is located at the one end portion of the elongated member, after locating the catcher cup at one lateral side of the web, after locating the abrasive nozzle assembly at the other lateral side of the web, and disposing the abrasive nozzle assembly and the catcher cup such that the central axis thereof is parallel to an upper surface of the cap flange and a lower surface of the base flange; cutting off both corner portions of the cap flange that are located at the one end portion of the elongated member, after disposing the abrasive nozzle assembly and the catcher cup at the one lateral side of the elongated member such that the abrasive nozzle assembly is located lower than the cap flange and the catcher cup is located higher than the cap flange, and disposing the abrasive nozzle assembly and the catcher cup such that the central axis thereof is parallel to a one-lateral-side surface and an other-lateral-side surface of the web; and cutting off a remaining portion of the cap flange that is located at the one end portion of the elongated member, after disposing the abrasive nozzle assembly and the catcher cup at the one lateral side of the elongated member such that the abrasive nozzle assembly is located higher than the cap flange and the catcher cup is located lower than the cap flange, and disposing the abrasive nozzle assembly and the catcher cup such that the central axis thereof is parallel to the one-lateral-side surface and the other-lateral-side surface of the web.

The above-described stringer manufacturing method of the invention in a still further embodiment includes the steps of: when the one end portion of the elongated member having the T-shape in a front view is to be machined into a desired shape, cutting off a one-lateral-side portion of the base flange and a lower end portion of the web that are located at the one end portion of the elongated member, after disposing the abrasive nozzle assembly and the catcher cup at one lateral side of the elongated member such that the abrasive nozzle assembly is located lower than the base flange and the catcher cup is located higher than the base flange, and disposing the abrasive nozzle assembly so as to be located closer to the central axis of the elongated member than the catcher cup is; cutting off an other-lateral-side portion of the base flange and a lower end portion of the web that are located at the one end portion of the elongated member, after disposing the abrasive nozzle assembly and the catcher cup at the other lateral side of the elongated member such that the abrasive nozzle assembly is located lower than the base flange and the catcher cup is located higher than the base flange, and disposing the abrasive nozzle assembly so as to be located closer to the central axis of the elongated member than the catcher cup is; cutting off a portion of the web that is located at the one end portion of the elongated member, after locating the catcher cup at one lateral side of the web, and locating the abrasive nozzle assembly at the other lateral side of the web, and disposing the abrasive nozzle assembly and the catcher cup such that the central axis thereof is parallel to an upper surface of the cap flange and a lower surface of the base flange; and cutting off a portion of the cap flange that is located at the one end portion of the elongated member, after disposing the abrasive nozzle assembly and the catcher cup at the one lateral side of the elongated member such that the abrasive nozzle assembly is located higher than the cap flange and the catcher cup is located lower than the cap flange, and disposing the abrasive nozzle assembly and the catcher cup such that the central axis thereof is parallel to a one-lateral-side surface and an other-lateral-side surface of the web.

According to one of the above-described stringer manufacturing methods, the distance between the abrasive nozzle assembly and the elongated member, more specifically, the distance between the outlet of the abrasive nozzle assembly and a surface of the elongated member, is kept (maintained) (substantially) constant.

Thus, it is possible to produce a smooth machined surface, thus eliminating a finishing process, and to further enhance the productivity.

According to one of the above-described stringer manufacturing methods, the base flange is machined prior to the cap flange, and cutting chips fall to the lower side without being accumulated on the base flange. Thus, when the cap flange is machined, the movements of the abrasive nozzle assembly and the catcher cup are not blocked by the cutting chips accumulated on the base flange.

Thus, it is possible to efficiently machine the elongated member and to further enhance the productivity.

### {Advantageous Effects of Invention}

According to the stringer manufacturing method of the present invention, an advantage is afforded in that it is possible to enhance the productivity, to improve the working environment of workers, and to reduce manufacturing costs.

### {Brief Description of Drawings}

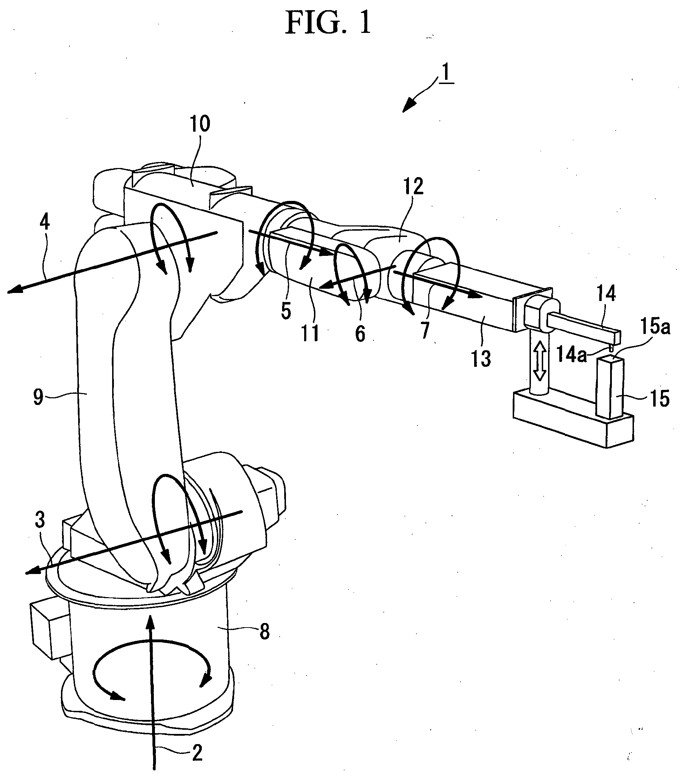

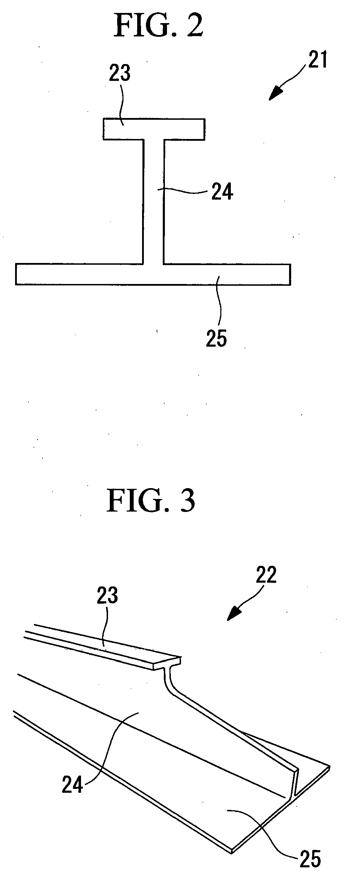

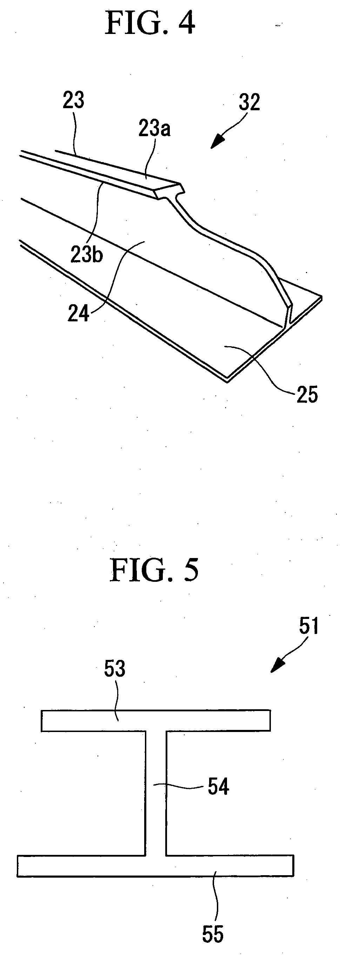

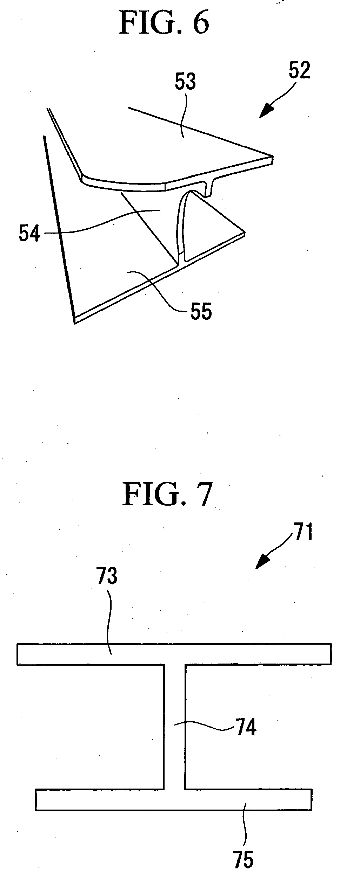

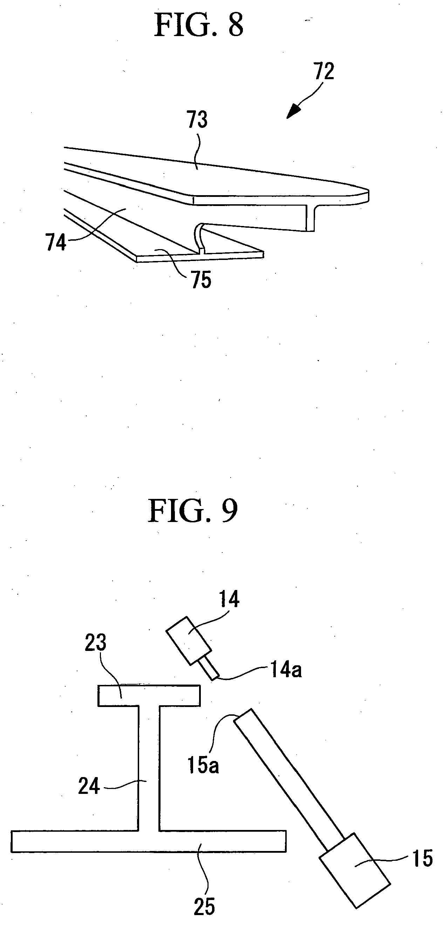

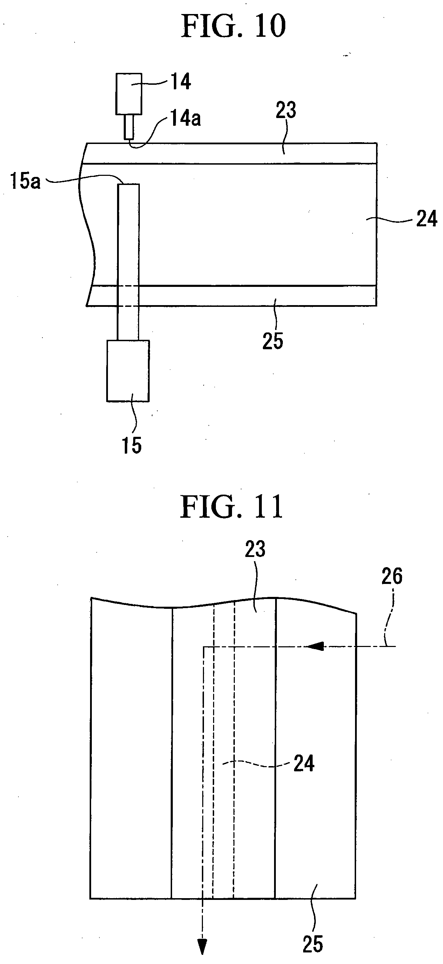

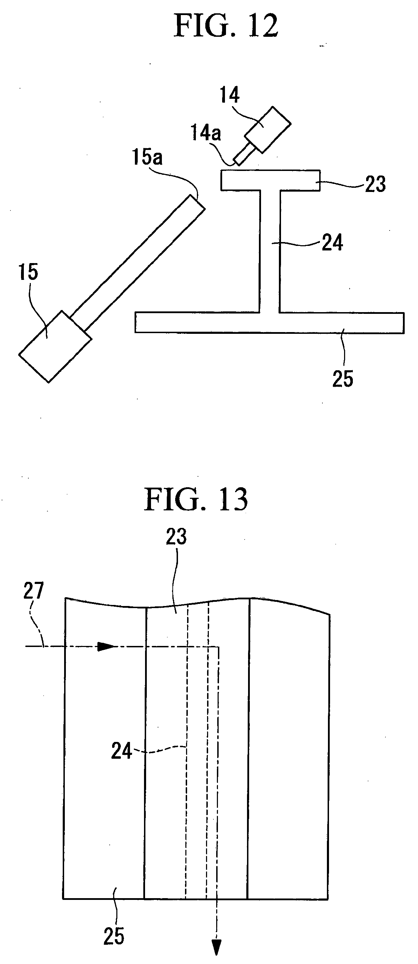

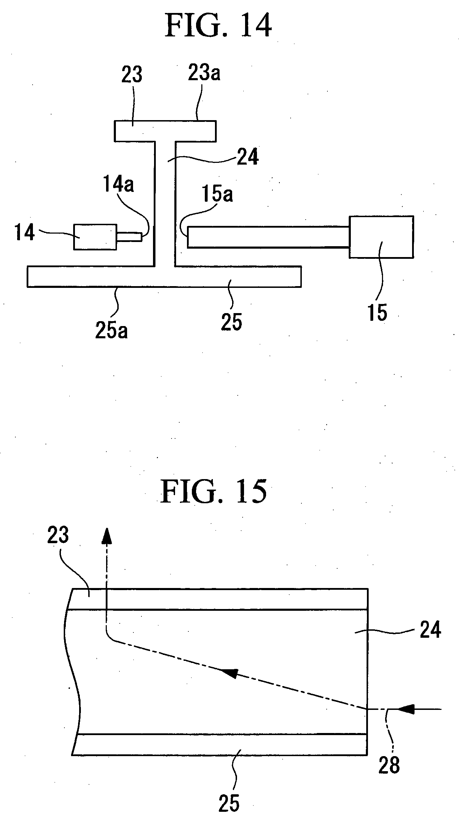

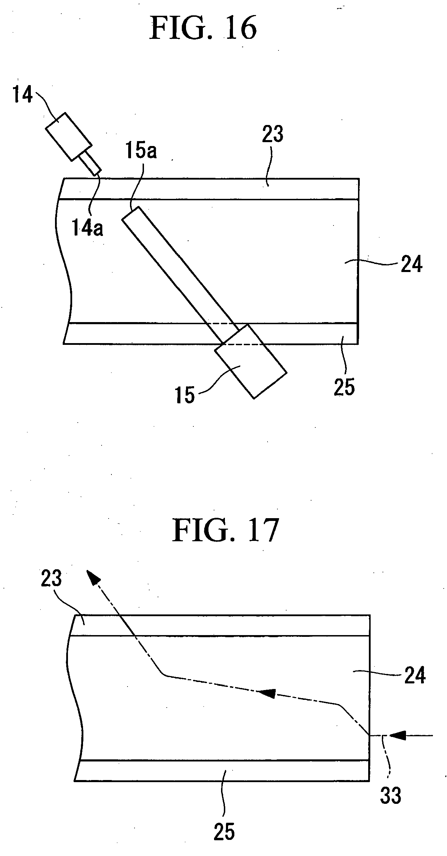

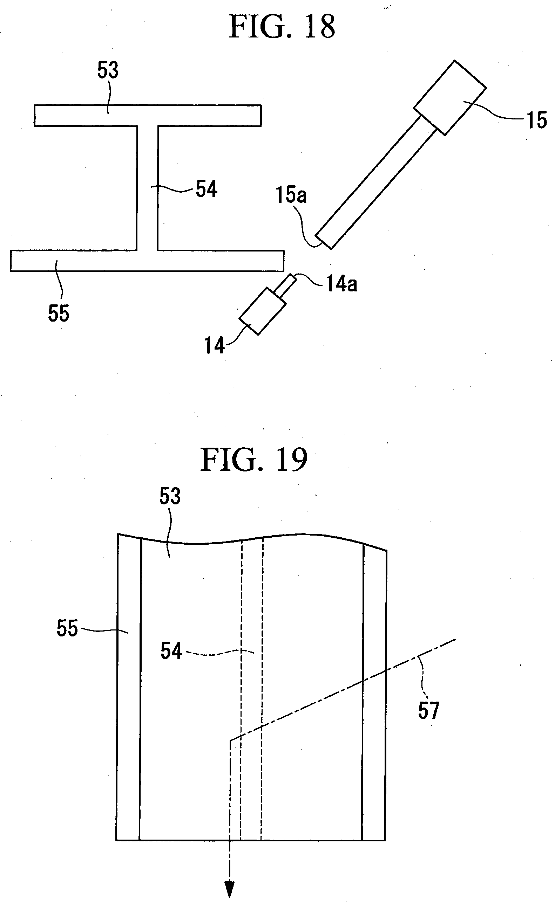

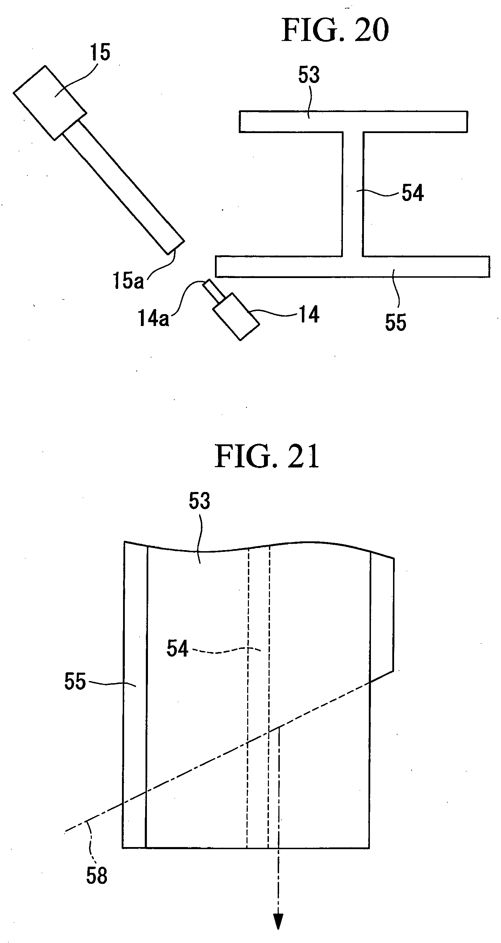

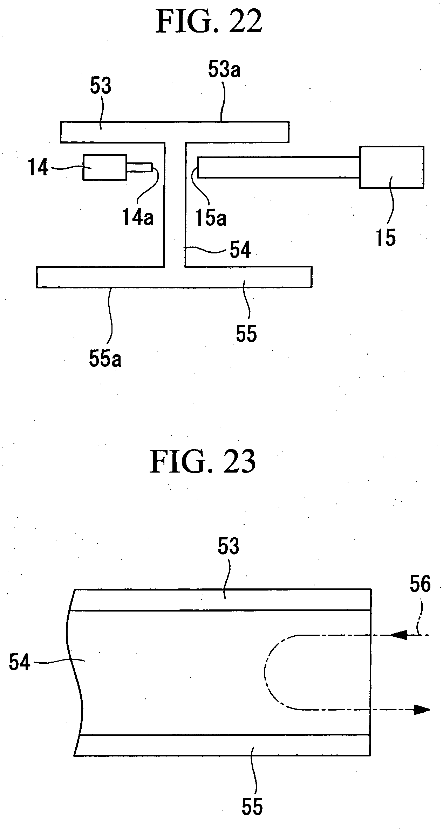

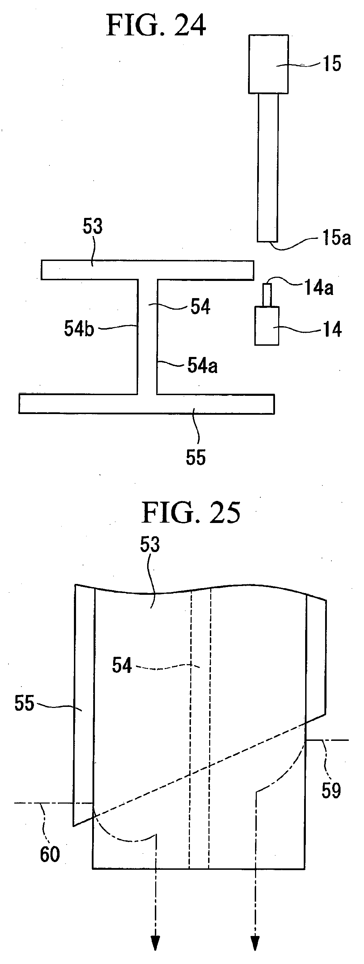

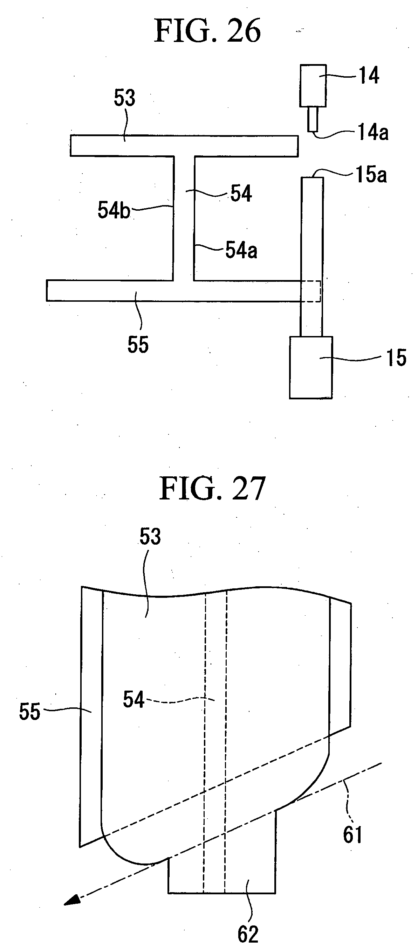

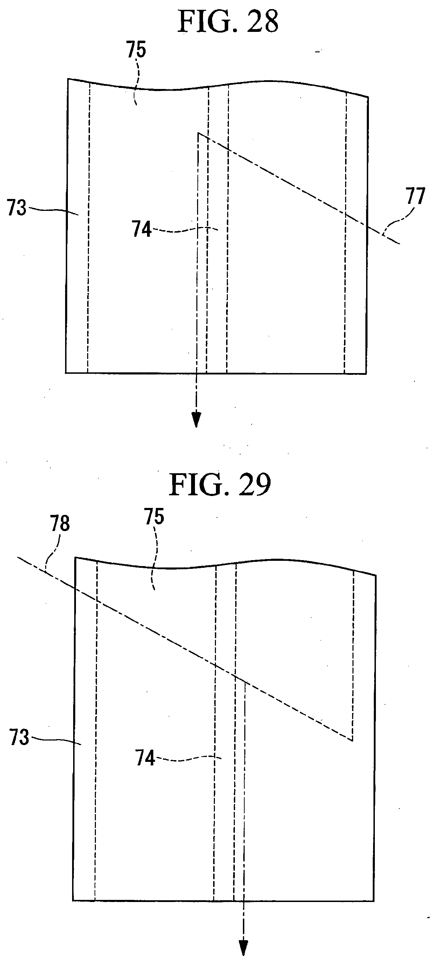

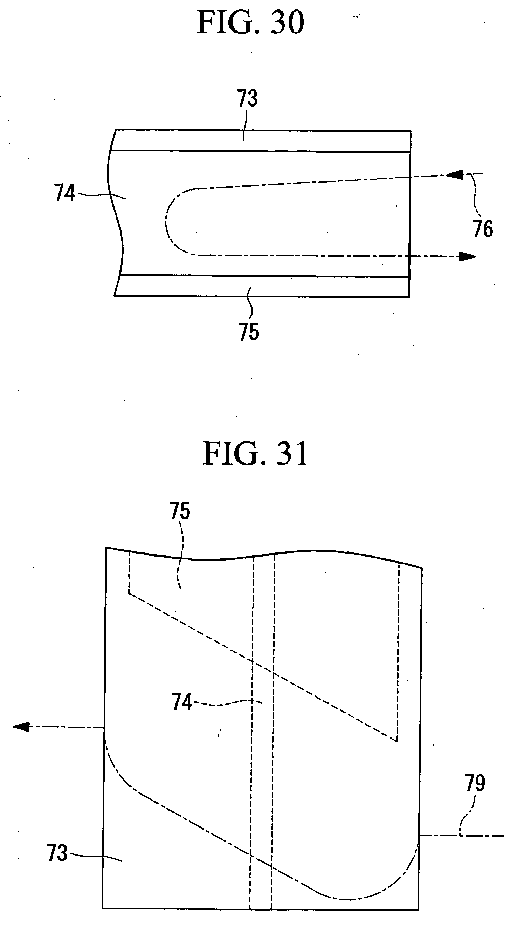

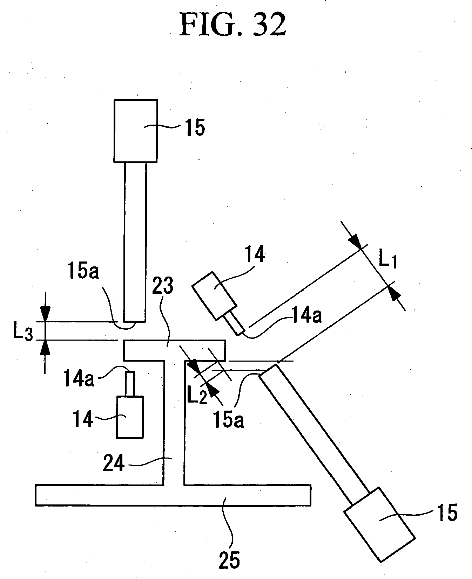

{Fig. 1} Fig. 1 is a view of the overall structure of a 6-axis robot used in stringer manufacturing methods according to the present invention.
{Fig. 2} Fig. 2 is a front view of an elongated member to be machined by stringer manufacturing methods according to a first embodiment and a second embodiment of the present invention.
{Fig. 3} Fig. 3 is a perspective view of a stringer machined by the stringer manufacturing method according to the first embodiment of the present invention.
{Fig. 4} Fig. 4 is a perspective view of a stringer machined by the stringer manufacturing method according to the second embodiment of the present invention.
{Fig. 5} Fig. 5 is a front view of an elongated member to be machined by a stringer manufacturing method according to a third embodiment of the present invention.
{Fig. 6} Fig. 6 is a perspective view of a stringer machined by the stringer manufacturing method according to the third embodiment of the present invention.
{Fig. 7} Fig. 7 is a front view of an elongated member to be machined by a stringer manufacturing method according to a fourth embodiment of the present invention.
{Fig. 8} Fig. 8 is a perspective view of a stringer machined by the stringer manufacturing method according to the fourth embodiment of the present invention.
{Fig. 9} Fig. 9 is a view for explaining the stringer manufacturing methods of the present invention and is a front view as viewed from the front.
{Fig. 10} Fig. 10 is a view for explaining the stringer manufacturing method of the present invention and is a side view as viewed from a lateral side.
{Fig. 11} Fig. 11 is a view for explaining the stringer manufacturing methods of the present invention and is a plan view as viewed from above.
{Fig. 12} Fig. 12 is a view for explaining the stringer manufacturing methods of the present invention and is a front view as viewed from the front.
{Fig. 13} Fig. 13 is a view for explaining the stringer manufacturing methods of the present invention and is a plan view as viewed from above.
{Fig. 14} Fig. 14 is a view for explaining the stringer manufacturing methods of the present invention and is a front view as viewed from the front.
{Fig. 15} Fig. 15 is a view for explaining the stringer manufacturing method of the present invention and is a side view as viewed from a lateral side.
{Fig. 16} Fig. 16 is a view for explaining the stringer manufacturing method of the present invention and is a side view as viewed from a lateral side.
{Fig. 17} Fig. 17 is a view for explaining the stringer manufacturing method of the present invention and is a side view as viewed from a lateral side.
{Fig. 18} Fig. 18 is a view for explaining the stringer manufacturing methods of the present invention and is a front view as viewed from the front.
{Fig. 19} Fig. 19 is a view for explaining the stringer manufacturing method of the present invention and is a plan view as viewed from above.
{Fig. 20} Fig. 20 is a view for explaining the stringer manufacturing methods of the present invention and is a front view as viewed from the front.
{Fig. 21} Fig. 21 is a view for explaining the stringer manufacturing method of the present invention and is a plan view as viewed from above.
{Fig. 22} Fig. 22 is a view for explaining the stringer manufacturing methods of the present invention and is a front view as viewed from the front.
{Fig. 23} Fig. 23 is a view for explaining the stringer manufacturing method of the present invention and is a side view as viewed from a lateral side.
{Fig. 24} Fig. 24 is a view for explaining the stringer manufacturing method of the present invention and is a front view as viewed from the front.
{Fig. 25} Fig. 25 is a view for explaining the stringer manufacturing method of the present invention and is a plan view as viewed from above.
{Fig. 26} Fig. 26 is a view for explaining the stringer manufacturing methods of the present invention and is a front view as viewed from the front.
{Fig. 27} Fig. 27 is a view for explaining the stringer manufacturing method of the present invention and is a plan view as viewed from above.
{Fig. 28} Fig. 28 is a view for explaining the stringer manufacturing method of the present invention and is a plan view as viewed from above.
{Fig. 29} Fig. 29 is a view for explaining the stringer manufacturing method of the present invention and is a plan view as viewed from above.
{Fig. 30} Fig. 30 is a view for explaining the stringer manufacturing method of the present invention and is a side view as viewed from a lateral side.
{Fig. 31} Fig. 31 is a view for explaining the stringer manufacturing method of the present invention and is a plan view as viewed from above.
{Fig. 32} Fig. 32 is a view for explaining a stringer manufacturing method of another embodiment of the present invention and is a front view as viewed from the front.

### {Description of Embodiments}

Stringer (longeron) manufacturing methods according to the present invention will be described below with reference to Figs. 1 to 31.

The stringer manufacturing methods of the present invention are performed by using a 6-axis robot (vertical articulated robot) 1 shown in Fig. 1, for example. The 6-axis robot 1 is an industrial robot having a swivel base 8 and arms 9, 10, 11, and 12 that rotate about rotational axes indicated by reference numerals 2, 3, 4, 5, 6, and 7 in Fig. 1. An abrasive nozzle assembly 14 and a catcher cup 15 are attached to a tip of a valve unit 13 (the end opposite to the end of the valve unit 13 to which the arm 12 is connected).

Ultrahigh-pressure water containing abrasive (abrading agent) is injected from an outlet 14a of the abrasive nozzle assembly 14 that faces an inlet 15a of the catcher cup 15. The ultrahigh-pressure water containing abrasive injected from the outlet 14a of the abrasive nozzle assembly 14 is recovered by the catcher cup 15 via the inlet 15a. The height dimension (the length in the vertical direction (up and down direction in Fig. 1)) of a tip of the abrasive nozzle assembly 14 (the end thereof at the outlet 14a side) is set to a value from 55 mm to 24 mm depending on the size of the stringer, and the width dimension (the length in the thickness direction (a direction orthogonal to the rotational axis 7)) thereof is set to a value from 25 mm to 10 mm.

The stringer manufacturing methods of the present invention are used to machine, for example, one end portion of an elongated member (a wing tip portion if the stringer constitutes an aircraft main wing) with a cross-sectional shape shown in Fig. 2 (having a length corresponding to the length of the aircraft main wing, for example) into a shape shown in Fig. 3 or Fig. 4 by using the 6-axis robot 1; to machine, for example, one end portion of an elongated member (a wing root portion if the stringer constitutes an aircraft main wing) with a cross-sectional shape shown in Fig. 5 (having a length corresponding to the length of the aircraft main wing, for example) into a shape shown in Fig. 6 by using the 6-axis robot 1; and to machine, for example, one end portion of an elongated member (a wing root portion if the stringer constitutes an aircraft main wing) with a cross-sectional shape shown in Fig. 7 (having a length corresponding to the length of the aircraft main wing, for example) into a shape shown in Fig. 8 by using the 6-axis robot 1.

First, a description will be given of a stringer manufacturing method according to a first embodiment of the present invention, in which the 6-axis robot 1 is used to machine one end portion of an elongated member 21 shown in Fig. 2 into a shape shown in Fig. 3, thereby manufacturing a stringer 22.

The elongated member 21 is made, for example, of carbon fiber reinforced plastic (CFRP), which is formed by combining carbon fibers and plastic. As shown in Fig. 2, the elongated member 21 is provided with a cap flange 23, a web 24, and a base flange 25 wider than the cap flange 23 and is formed so as to have an inverted T-shape in cross-section (front view). The cap flange 23, the web 24, and the base flange 25 are all plate-like members and are joined to form a single unit as a whole.

The elongated member 21 is secured to special jigs (not shown), and the abrasive nozzle assembly 14 and the catcher cup 15 are disposed in a state shown in Figs. 9 and 10. Specifically, the abrasive nozzle assembly 14 and the catcher cup 15 are disposed at one lateral side of the elongated member 21 such that the abrasive nozzle assembly 14 is located higher than the cap flange 23, and the catcher cup 15 is located lower than the cap flange 23; the abrasive nozzle assembly 14 and the catcher cup 15 are disposed so as to be located in a plane orthogonal to the longitudinal axis of the elongated member 21; and the abrasive nozzle assembly 14 is disposed so as to be located closer to the inner side (closer to the web 24 or closer to the central axis of the elongated member 21) than the catcher cup 15 is.

After the abrasive nozzle assembly 14 and the catcher cup 15 are disposed at the predetermined positions, specifically, after the abrasive nozzle assembly 14 and the catcher cup 15 are disposed in the state shown in Figs. 9 and 10, ultrahigh-pressure water containing abrasive is injected from the outlet 14a of the abrasive nozzle assembly 14, and the abrasive nozzle assembly 14 and the catcher cup 15 are moved along a trim line (cutoff line: cutting line) 26 indicated by a one-dot chain line in Fig. 11. At this time, the abrasive nozzle assembly 14 and the catcher cup 15 are moved while maintaining the state shown in Figs. 9 and 10. Through this stroke, a one-lateral-side portion of the cap flange 23 and an upper end portion of the web 24 that are located at one end portion of the elongated member 21 are cut off in a rectangular shape in plan view (as viewed from above).

After the one-lateral-side portion of the cap flange 23 and the upper end portion of the web 24 located at one end portion of the elongated member 21 have been cut off, the injection of ultrahigh-pressure water containing abrasive is stopped, and the abrasive nozzle assembly 14 and the catcher cup 15 are then disposed in a state shown in Figs. 10 and 12. Specifically, the abrasive nozzle assembly 14 and the catcher cup 15 are disposed at the other lateral side of the elongated member 21 such that the abrasive nozzle assembly 14 is located higher than the cap flange 23, and the catcher cup 15 is located lower than the cap flange 23; the abrasive nozzle assembly 14 and the catcher cup 15 are disposed so as to be located in a plane orthogonal to the longitudinal axis of the elongated member 21; and the abrasive nozzle assembly 14 is disposed so as to be located closer to the inner side (closer to the web 24 or closer to the central axis of the elongated member 21) than the catcher cup 15 is.

After the abrasive nozzle assembly 14 and the catcher cup 15 are disposed at the predetermined positions, specifically, after the abrasive nozzle assembly 14 and the catcher cup 15 are disposed in the state shown in Figs. 10 and 12, ultrahigh-pressure water containing abrasive is injected again from the outlet 14a of the abrasive nozzle assembly 14, and the abrasive nozzle assembly 14 and the catcher cup 15 are moved along a trim line 27 indicated by a one-dot chain line in Fig. 13. At this time, the abrasive nozzle assembly 14 and the catcher cup 15 are moved while maintaining the state shown in Figs. 10 and 12. Through this stroke, an other-lateral-side portion of the cap flange 23 and an upper end portion of the web 24 that are located at one end portion of the elongated member 21 are cut off in a rectangular shape in plan view (as viewed from above).

After the other-lateral-side portion of the cap flange 23 and the upper end portion of the web 24 located at one end portion of the elongated member 21 have been cut off, the injection of ultrahigh-pressure water containing abrasive is stopped, and the abrasive nozzle assembly 14 and the catcher cup 15 are then disposed in a state shown in Fig. 14. Specifically, the abrasive nozzle assembly 14 and the catcher cup 15 are disposed such that the catcher cup 15 is located at one lateral side of the web 24, and the abrasive nozzle assembly 14 is located at the other lateral side of the web 24, the abrasive nozzle assembly 14 and the catcher cup 15 are located in a plane orthogonal to the longitudinal axis of the elongated member 21, and the central axis of the abrasive nozzle assembly 14 and the catcher cup 15 is parallel to an upper surface 23a of the cap flange 23 and a lower surface 25a of the base flange 25.

After the abrasive nozzle assembly 14 and the catcher cup 15 are disposed at the predetermined positions, specifically, after the abrasive nozzle assembly 14 and the catcher cup 15 are disposed in the state shown in Fig. 14, ultrahigh-pressure water containing abrasive is injected again from the outlet 14a of the abrasive nozzle assembly 14, and the abrasive nozzle assembly 14 and the catcher cup 15 are moved along a trim line 28 indicated by a one-dot chain line in Fig. 15. At this time, the abrasive nozzle assembly 14 and the catcher cup 15 are moved while maintaining the state shown in Fig. 14. Through this stroke, a portion of the web 24 located at one end portion of the elongated member 21 is cut off in a nearly-trapezoidal shape in side view (as viewed from a lateral side).

The thus-formed stringer 22 (see Fig. 3) is used (utilized) as a stringer that constitutes an aircraft main wing, for example.

According to the stringer manufacturing method of this embodiment, machining of one end portion of the elongated member 21 into a desired shape is automatically performed by the 6-axis robot 1, without using tools (a drill, a circular saw, etc.) and guiding jigs, which are conventionally used.

Thus, it is possible to enhance the productivity, to improve the working environment of workers, and to reduce manufacturing costs.

According to the stringer manufacturing method of this embodiment, the distance between the abrasive nozzle assembly 14 and the elongated member 21, more specifically, the distance between the outlet 14a of the abrasive nozzle assembly 14 and a surface of the elongated member 21, is kept (maintained) (substantially) constant.

Thus, it is possible to produce a smooth machined surface, thus eliminating a finishing process, and to further enhance the productivity.

Next, a description will be given of a stringer manufacturing method according to a second embodiment of the present invention, in which the 6-axis robot 1 is used to machine one end portion of the elongated member 21 shown in Fig. 2 into a shape shown in Fig. 4, thereby manufacturing a stringer 32.

As in the above-described embodiment, the elongated member 21 is secured to special jigs (not shown), and the abrasive nozzle assembly 14 and the catcher cup 15 are disposed in a state shown in Figs. 9 and 16. Specifically, the abrasive nozzle assembly 14 and the catcher cup 15 are disposed at one lateral side of the elongated member 21 such that the abrasive nozzle assembly 14 is located higher than the cap flange 23 and the catcher cup 15 is located lower than the cap flange 23; the abrasive nozzle assembly 14 is disposed so as to be located closer to the other end of the elongated member 21 than the catcher cup 15 is; and the abrasive nozzle assembly 14 is disposed so as to be located closer to the inner side (closer to the web 24 or closer to the central axis of the elongated member 21) than the catcher cup 15 is.

After the abrasive nozzle assembly 14 and the catcher cup 15 are disposed at the predetermined positions, specifically, after the abrasive nozzle assembly 14 and the catcher cup 15 are disposed in the state shown in Figs. 9 and 16, ultrahigh-pressure water containing abrasive is injected from the outlet 14a of the abrasive nozzle assembly 14, and the abrasive nozzle assembly 14 and the catcher cup 15 are moved along the trim line 26 indicated by the one-dot chain line in Fig. 11. At this time, the abrasive nozzle assembly 14 and the catcher cup 15 are moved while maintaining the state shown in Figs. 9 and 16. Through this stroke, a one-lateral-side portion of the cap flange 23 and an upper end portion of the web 24 that are located at one end portion of the elongated member 21 are cut off in a rectangular shape in plan view (as viewed from above).

Since the abrasive nozzle assembly 14 is disposed closer to the other end of the elongated member 21 than the catcher cup 15 is, the cut end of the cap flange 23 is made slanted, as shown in Fig. 4; specifically, the end of the upper surface 23a of the cap flange 23 is located closer to the other end of the elongated member 21 than the end of a lower surface 23b thereof is.

After the one-lateral-side portion of the cap flange 23 and the upper end portion of the web 24 located at one end portion of the elongated member 21 have been cut off, the injection of ultrahigh-pressure water containing abrasive is stopped, and the abrasive nozzle assembly 14 and the catcher cup 15 are then disposed in a state shown in Figs. 12 and 16. Specifically, the abrasive nozzle assembly 14 and the catcher cup 15 are disposed at the other lateral side of the elongated member 21 such that the abrasive nozzle assembly 14 is located higher than the cap flange 23 and the catcher cup 15 is located lower than the cap flange 23; the abrasive nozzle assembly 14 is disposed so as to be located closer to the other end of the elongated member 21 than the catcher cup 15 is; and the abrasive nozzle assembly 14 is disposed so as to be located closer to the inner side (closer to the web 24 or closer to the central axis of the elongated member 21) than the catcher cup 15 is.

After the abrasive nozzle assembly 14 and the catcher cup 15 are disposed at the predetermined positions, specifically, after the abrasive nozzle assembly 14 and the catcher cup 15 are disposed in the state shown in Figs. 12 and 16, ultrahigh-pressure water containing abrasive is injected again from the outlet 14a of the abrasive nozzle assembly 14, the abrasive nozzle assembly 14 and the catcher cup 15 are moved along the trim line 27 indicated by the one-dot chain line in Fig. 13. At this time, the abrasive nozzle assembly 14 and the catcher cup 15 are moved while maintaining the state shown in Figs. 12 and 16. Through this stroke, an other-lateral-side portion of the cap flange 23 and an upper end portion of the web 24 that are located at one end portion of the elongated member 21 are cut off in a rectangular shape in plan view (as viewed from above).

After the other-lateral-side portion of the cap flange 23 and the upper end portion of the web 24 located at one end portion of the elongated member 21 have been cut off, the injection of ultrahigh-pressure water containing abrasive is stopped, and the abrasive nozzle assembly 14 and the catcher cup 15 are then disposed in the state shown in Fig. 14. Specifically, the abrasive nozzle assembly 14 and the catcher cup 15 are disposed such that the catcher cup 15 is located at one lateral side of the web 24, the abrasive nozzle assembly 14 is located at the other lateral side of the web 24, the abrasive nozzle assembly 14 and the catcher cup 15 are located in a plane orthogonal to the longitudinal axis of the elongated member 21, and the central axis of the abrasive nozzle assembly 14 and the catcher cup 15 is parallel to the upper surface 23a of the cap flange 23 and the lower surface 25a of the base flange 25.

After the abrasive nozzle assembly 14 and the catcher cup 15 are disposed at the predetermined positions, specifically, after the abrasive nozzle assembly 14 and the catcher cup 15 are disposed in the state shown in Fig. 14, ultrahigh-pressure water containing abrasive is injected again from the outlet 14a of the abrasive nozzle assembly 14, and the abrasive nozzle assembly 14 and the catcher cup 15 are moved along a trim line 33 indicated by a one-dot chain line in Fig. 17. At this time, the abrasive nozzle assembly 14 and the catcher cup 15 are moved while maintaining the state shown in Fig. 14. Through this stroke, a portion of the web 24 located at one end portion of the elongated member 21 is cut off in a wavelike shape in side view (as viewed from a lateral side).

The thus-formed stringer 32 (see Fig. 4) is used (utilized) as a stringer that constitutes an aircraft main wing, for example.

Since the functional effects of this embodiment are the same as those of the above-described first embodiment, a description thereof will be omitted.

Next, a description will be given of a stringer manufacturing method according to a third embodiment of the present invention, in which the 6-axis robot 1 is used to machine one end portion of an elongated member 51 shown in Fig. 5 into a shape shown in Fig. 6, thereby manufacturing a stringer 52.

The elongated member 51 is made, for example, of carbon fiber reinforced plastic (CFRP), which is formed by combining carbon fibers and plastic. As shown in Fig. 5, the elongated member 51 is provided with a cap flange 53, a web 54, and a base flange 55 slightly wider than the cap flange 53 and is formed so as to have an I-shape (or an H-shape) in cross-section (front view). The cap flange 53, the web 54, and the base flange 55 are all plate-like members and are joined to form a single unit as a whole.

As in the above-described embodiments, the elongated member 51 is secured to special jigs (not shown), and the abrasive nozzle assembly 14 and the catcher cup 15 are disposed in a state shown in Fig. 18. Specifically, the abrasive nozzle assembly 14 and the catcher cup 15 are disposed at one lateral side of the elongated member 51 such that the abrasive nozzle assembly 14 is located lower than the base flange 55 and the catcher cup 15 is located higher than the base flange 55; the abrasive nozzle assembly 14 and the catcher cup 15 are disposed so as to be located in a plane orthogonal to the longitudinal axis of the elongated member 51; and the abrasive nozzle assembly 14 is disposed so as to be located closer to the inner side (closer to the web 54 or closer to the central axis of the elongated member 51) than the catcher cup 15 is.

After the abrasive nozzle assembly 14 and the catcher cup 15 are disposed at the predetermined positions, specifically, after the abrasive nozzle assembly 14 and the catcher cup 15 are disposed in the state shown in Fig. 18, ultrahigh-pressure water containing abrasive is injected again from the outlet 14a of the abrasive nozzle assembly 14, and the abrasive nozzle assembly 14 and the catcher cup 15 are moved along a trim line 57 indicated by a one-dot chain line in Fig. 19. At this time, the abrasive nozzle assembly 14 and the catcher cup 15 are moved while maintaining the state shown in Fig. 18. Through this stroke, a one-lateral-side portion of the base flange 55 and a lower end portion of the web 54 that are located at one end portion of the elongated member 51 are cut off in a trapezoidal shape in plan view (as viewed from above).

After the one-lateral-side portion of the base flange 55 and the lower end portion of the web 54 located at one end portion of the elongated member 51 have been cut off, the injection of ultrahigh-pressure water containing abrasive is stopped, and the abrasive nozzle assembly 14 and the catcher cup 15 are then disposed in a state shown in Fig. 20. Specifically, the abrasive nozzle assembly 14 and the catcher cup 15 are disposed at the other lateral side of the elongated member 51 such that the abrasive nozzle assembly 14 is located lower than the base flange 55 and the catcher cup 15 is located higher than the base flange 55; the abrasive nozzle assembly 14 and the catcher cup 15 are disposed so as to be located in a plane orthogonal to the longitudinal axis of the elongated member 51; and the abrasive nozzle assembly 14 is disposed so as to be located closer to the inner side (closer to the web 54 or closer to the central axis of the elongated member 51) than the catcher cup 15 is.

After the abrasive nozzle assembly 14 and the catcher cup 15 are disposed at the predetermined positions, specifically, after the abrasive nozzle assembly 14 and the catcher cup 15 are disposed in the state shown in Fig. 20, ultrahigh-pressure water containing abrasive is injected again from the outlet 14a of the abrasive nozzle assembly 14, and the abrasive nozzle assembly 14 and the catcher cup 15 are moved along a trim line 58 indicated by a one-dot chain line in Fig. 21. At this time, the abrasive nozzle assembly 14 and the catcher cup 15 are moved while maintaining the state shown in Fig. 20. Through this stroke, an other-lateral-side portion of the base flange 55 and a lower end portion of the web 54 that are located at one end portion of the elongated member 51 are cut off in a trapezoidal shape in plan view (as viewed from above).

After the portion of the base flange 55 located at one end portion of the elongated member 51 has been cut off, the abrasive nozzle assembly 14 and the catcher cup 15 are then disposed in a state shown in Fig. 22. Specifically, the abrasive nozzle assembly 14 and the catcher cup 15 are disposed such that the catcher cup 15 is located at one lateral side of the web 24 and the abrasive nozzle assembly 14 is located at the other lateral side of the web 24; the abrasive nozzle assembly 14 and the catcher cup 15 are disposed so as to be located in a plane orthogonal to the longitudinal axis of the elongated member 51; and the abrasive nozzle assembly 14 and the catcher cup 15 are disposed such that the central axis thereof is parallel to an upper surface 53a of the cap flange 53 and a lower surface 55a of the base flange 55.

After the abrasive nozzle assembly 14 and the catcher cup 15 are disposed at the predetermined positions, specifically, after the abrasive nozzle assembly 14 and the catcher cup 15 are disposed in the state shown in Fig. 22, ultrahigh-pressure water containing abrasive is injected from the outlet 14a of the abrasive nozzle assembly 14, and the abrasive nozzle assembly 14 and the catcher cup 15 are moved along a trim line 56 indicated by a one-dot chain line in Fig. 23. At this time, the abrasive nozzle assembly 14 and the catcher cup 15 are moved while maintaining the state shown in Fig. 22. Through this stroke, a portion of the web 54 located at one end portion of the elongated member 51 is cut off in a U-shape in side view (as viewed from a lateral side).

After the portion of the web 54 located at one end portion of the elongated member 51 has been cut off, the abrasive nozzle assembly 14 and the catcher cup 15 are then disposed in a state shown in Fig. 24. Specifically, the abrasive nozzle assembly 14 and the catcher cup 15 are disposed at one lateral side of the elongated member 51 such that the abrasive nozzle assembly 14 is located lower than the cap flange 53 and the catcher cup 15 is located higher than the cap flange 53; the abrasive nozzle assembly 14 and the catcher cup 15 are disposed so as to be located in a plane orthogonal to the longitudinal axis of the elongated member 51; and the abrasive nozzle assembly 14 and the catcher cup 15 are disposed such that the central axis thereof is parallel to a one-lateral-side surface 54a and an other-lateral-side surface 54b of the web 54.

After the abrasive nozzle assembly 14 and the catcher cup 15 are disposed at the predetermined positions, specifically, after the abrasive nozzle assembly 14 and the catcher cup 15 are disposed in the state shown in Fig. 24, ultrahigh-pressure water containing abrasive is injected again from the outlet 14a of the abrasive nozzle assembly 14, and the abrasive nozzle assembly 14 and the catcher cup 15 are moved along trim lines 59 and 60 indicated by one-dot chain lines in Fig. 25. At this time, the abrasive nozzle assembly 14 and the catcher cup 15 are moved while maintaining the state shown in Fig. 24. Through this stroke, both corner portions of the cap flange 53 located at one end portion of the elongated member 51 are cut off in a round shape.

After both the corner portions of the cap flange 53 located at one end portion of the elongated member 51 have been cut off, the abrasive nozzle assembly 14 and the catcher cup 15 are then disposed in a state shown in Fig. 26. Specifically, the abrasive nozzle assembly 14 and the catcher cup 15 are disposed at one lateral side of the elongated member 51 such that the abrasive nozzle assembly 14 is located higher than the cap flange 53 and the catcher cup 15 is located lower than the cap flange 53; the abrasive nozzle assembly 14 and the catcher cup 15 are disposed so as to be located in a plane orthogonal to the longitudinal axis of the elongated member 51; and the abrasive nozzle assembly 14 and the catcher cup 15 are disposed such that the central axis thereof is parallel to the one-lateral-side surface 54a and the other-lateral-side surface 54b of the web 54.

After the abrasive nozzle assembly 14 and the catcher cup 15 are disposed at the predetermined positions, specifically, after the abrasive nozzle assembly 14 and the catcher cup 15 are disposed in the state shown in Fig. 26, ultrahigh-pressure water containing abrasive is injected again from the outlet 14a of the abrasive nozzle assembly 14, and the abrasive nozzle assembly 14 and the catcher cup 15 are moved along a trim line 61 indicated by a one-dot chain line in Fig. 27. At this time, the abrasive nozzle assembly 14 and the catcher cup 15 are moved while maintaining the state shown in Fig. 26. Through this stroke, a remaining portion (protruding portion) 62 of the cap flange 53 located at one end portion of the elongated member 51 is cut off in a trapezoidal shape in plan view (as viewed from above).

The thus-formed stringer 52 (see Fig. 6) is used (utilized) as a stringer that constitutes an aircraft main wing, for example.

According to the stringer manufacturing method of this embodiment, because the base flange 55 is machined prior to the cap flange 53, and cutting chips fall to the lower side, without being accumulated on the base flange 55, when the cap flange 53 is machined, the movements of the abrasive nozzle assembly 14 and the catcher cup 15 are not blocked by the cutting chips accumulated on the base flange 55.

Therefore, it is possible to efficiently machine the elongated member 51 and to further enhance the productivity.

Since the other functional effects are the same as those of the above-described embodiment, a description thereof will be omitted.

Finally, a description will be given of a stringer manufacturing method according to a fourth embodiment of the present invention, in which the 6-axis robot 1 is used to machine one end portion of an elongated member 71 shown in Fig. 7 into a shape shown in Fig. 8, thereby manufacturing a stringer 72.

The elongated member 71 is made, for example, of carbon fiber reinforced plastic (CFRP), which is formed by combining carbon fibers and plastic. As shown in Fig. 7, the elongated member 71 is provided with a cap flange 73, a web 74, and a base flange 75 slightly narrower than the cap flange 73 and is formed so as to have a T-shape (or an H-shape) in cross-section (front view). The cap flange 73, the web 74, and the base flange 75 are all plate-like members and are joined to form a single unit as a whole.

As in the above-described embodiments, the elongated member 71 is secured to special jigs (not shown), and the abrasive nozzle assembly 14 and the catcher cup 15 are disposed in the state shown in Fig. 18, as in the above-described third embodiment.

After the abrasive nozzle assembly 14 and the catcher cup 15 are disposed at the predetermined positions, specifically, after the abrasive nozzle assembly 14 and the catcher cup 15 are disposed in the state shown in Fig. 18, ultrahigh-pressure water containing abrasive is injected again from the outlet 14a of the abrasive nozzle assembly 14, and the abrasive nozzle assembly 14 and the catcher cup 15 are moved along a trim line 77 indicated by a one-dot chain line in Fig. 28. At this time, the abrasive nozzle assembly 14 and the catcher cup 15 are moved while maintaining the state shown in Fig. 18. Through this stroke, a one-lateral-side portion of the base flange 75 and a lower end portion of the web 74 that are located at one end portion of the elongated member 71 are cut off in a trapezoidal shape in plan view (as viewed from above).

After the one-lateral-side portion of the base flange 75 and the lower end portion of the web 74 located at one end portion of the elongated member 71 have been cut off, the injection of ultrahigh-pressure water containing abrasive is stopped, and the abrasive nozzle assembly 14 and the catcher cup 15 are then disposed in the state shown in Fig. 20, as in the above-described third embodiment.

After the abrasive nozzle assembly 14 and the catcher cup 15 are disposed at the predetermined positions, specifically, after the abrasive nozzle assembly 14 and the catcher cup 15 are disposed in the state shown in Fig. 20, ultrahigh-pressure water containing abrasive is injected again from the outlet 14a of the abrasive nozzle assembly 14, and the abrasive nozzle assembly 14 and the catcher cup 15 are moved along a trim line 78 indicated by a one-dot chain line in Fig. 29. At this time, the abrasive nozzle assembly 14 and the catcher cup 15 are moved while maintaining the state shown in Fig. 20. Through this stroke, an other-lateral-side portion of the base flange 75 and a lower end portion of the web 74 located at one end portion of the elongated member 71 are cut off in a trapezoidal shape in plan view (as viewed from above).

After the portion of the base flange 75 located at one end portion of the elongated member 71 has been cut off, the abrasive nozzle assembly 14 and the catcher cup 15 are then disposed in the state shown in Fig. 22, as in the above-described third embodiment.

After the abrasive nozzle assembly 14 and the catcher cup 15 are disposed at the predetermined positions, specifically, after the abrasive nozzle assembly 14 and the catcher cup 15 are disposed in the state shown in Fig. 22, ultrahigh-pressure water containing abrasive is injected from the outlet 14a of the abrasive nozzle assembly 14, and the abrasive nozzle assembly 14 and the catcher cup 15 are moved along a trim line 76 indicated by a one-dot chain line in Fig. 30. At this time, the abrasive nozzle assembly 14 and the catcher cup 15 are moved while maintaining the state shown in Fig. 22. Through this stroke, a portion of the web 74 located at one end portion of the elongated member 71 is cut off in a U-shape in side view (as viewed from a lateral side) and is cut more largely (more deeply) toward the other end of the elongated member 71 than in the above-described third embodiment.

After the portion of the web 74 located at one end portion of the elongated member 71 has been cut off, the abrasive nozzle assembly 14 and the catcher cup 15 are then disposed in the state shown in Fig. 26, as in the above-described third embodiment.

After the abrasive nozzle assembly 14 and the catcher cup 15 are disposed at the predetermined positions, specifically, after the abrasive nozzle assembly 14 and the catcher cup 15 are disposed in the state shown in Fig. 26, ultrahigh-pressure water containing abrasive is injected again from the outlet 14a of the abrasive nozzle assembly 14, and the abrasive nozzle assembly 14 and the catcher cup 15 are moved along a trim line 79 indicated by a one-dot chain line in Fig. 31. At this time, the abrasive nozzle assembly 14 and the catcher cup 15 are moved while maintaining the state shown in Fig. 26. Through this stroke, both corner portions of the cap flange 73 located at one end portion of the elongated member 71 are cut off in a round shape.

The thus-formed stringer 72 (see Fig. 8) is used (utilized) as a stringer that constitutes an aircraft main wing, for example.

Since the functional effects of this embodiment are the same as those of the above-described third embodiment, a description thereof will be omitted.

The present invention is not limited to the above-described embodiments, and various changes and modifications can be made without departing from the scope of the present invention, as defined by the appended claims.

In the above-described embodiments, it is more preferable that the 6-axis robot 1 be provided with a space adjustment mechanism (not shown) that adjusts the space between the abrasive nozzle assembly 14 and the catcher cup 15 such that the space between the catcher cup 15 and the elongated member 21, 51, or 71 is maintained constant, for example, such that L2 and L3 in Fig. 32 become equal (L2 = L3).

As the space adjustment mechanism, a longitudinal motion mechanism that can move in a direction indicated by a white arrow in Fig. 1, such as an air cylinder (not shown), can be used. Thus, even when the plate thickness of a cut portion is changed, it is possible to maintain the space between the catcher cup 15 and the elongated member 21, 51, or 71 constant according to the change in the plate thickness of the cut portion, to easily recover ultrahigh-pressure water containing abrasive, to produce a smooth machined surface, thus eliminating a finishing process, and to further enhance the productivity. Since all of the ultrahigh-pressure water containing abrasive is recovered, it is possible to maintain the moving speed (specifically, cutting speed) of the abrasive nozzle assembly 14 and the catcher cup 15 constant and to further enhance the productivity.

In a case where the space adjustment mechanism is not provided, L1 in Fig. 32 is fixed. Thus, in some cases, L3 becomes larger than L2 in Fig. 32 (L3 > L2), the recovery rate of ultrahigh-pressure water containing abrasive is reduced, and scattering abrasive may damage the workpiece.

### {Reference Signs List}

1 6-axis robot (vertical articulated robot)
12 arm
14 abrasive nozzle assembly
15 catcher cup
21 long member
22 stringer
23 cap flange
24 web
25 base flange
32 stringer
51 long member
52 stringer
53 cap flange
54 web
55 base flange
62 remaining portion
71 long member
72 stringer
73 cap flange
74 web
75 base flange

## Claims

1. A stringer manufacturing method for machining one end portion of an elongated member (21) that is provided with a cap flange (23), a web (24), and a base flange (25) and that has an inverted T-shape in a front view into a desired shape to obtain a desired stringer (22;32),
wherein the one end portion of the elongated member (21) is machined into a desired shape by using a vertical articulated robot (1) that has at least 6 axes and that has, at the tip of an arm (13), an abrasive nozzle assembly (14) that injects ultrahigh-pressure water containing abrasive and a catcher cup (15) that recovers the ultrahigh-pressure water injected from the abrasive nozzle assembly (14),
the stringer manufacturing method comprising the steps of:
disposing the abrasive nozzle assembly (14) and the catcher cup (15) at one lateral side of the elongated member (21) such that the abrasive nozzle assembly (14) is located higher than the cap flange (23) and the catcher cup (15) is located lower than the cap flange (23), and disposing the abrasive nozzle assembly (14) so as to be located closer to the central axis of the elongated member (21) than the catcher cup (15) is, and cutting off a one-lateral-side portion of the cap flange (23) and an upper end portion of the web (24) that are located at the one end portion of the elongated member (21);
disposing the abrasive nozzle assembly (14) and the catcher cup (15) at the other lateral side of the elongated member (21) such that the abrasive nozzle assembly (14) is located higher than the cap flange (23) and the catcher cup (15) is located lower than the cap flange (23), and disposing the abrasive nozzle assembly (14) so as to be located closer to the central axis of the elongated member (21) than the catcher cup (15) is, and cutting off an other-lateral-side portion of the cap flange (23) and an upper end portion of the web (24) that are located at the one end portion of the elongated member (21); and
locating the catcher cup (15) at one lateral side of the web (24), after locating the abrasive nozzle assembly (14) at the other lateral side of the web (24), and disposing the abrasive nozzle assembly (14) and the catcher cup (15) such that the central axis thereof is parallel to an upper surface of the cap flange (23) and a lower surface of the base flange (25), and cutting off a portion of the web (24) that is located at the one end portion of the elongated member (21).

2. A stringer manufacturing method for machining one end portion of an elongated member (51) that is provided with a cap flange (53), a web (54), and a base flange (55) and that has an I-shape in a front view into a desired shape to obtain a desired stringer (52),
wherein the one end portion of the elongated member (51) is machined into a desired shape by using a vertical articulated robot (1) that has at least 6 axes and that has, at the tip of an arm (13), an abrasive nozzle assembly (14) that injects ultrahigh-pressure water containing abrasive and a catcher cup (15) that recovers the ultrahigh-pressure water injected from the abrasive nozzle assembly (14),
the stringer manufacturing method comprising the steps of:
disposing the abrasive nozzle assembly (14) and the catcher cup (15) at one lateral side of the elongated member (51) such that the abrasive nozzle assembly (14) is located lower than the base flange (55) and the catcher cup (15) is located higher than the base flange (55), and disposing the abrasive nozzle assembly (14) so as to be located closer to the central axis of the elongated member (51) than the catcher cup (15) is, and cutting off a one-lateral-side portion of the base flange (55) and a lower end portion of the web (54) that are located at the one end portion of the elongated member (51);
disposing the abrasive nozzle assembly (14) and the catcher cup (15) at the other lateral side of the elongated member (51) such that the abrasive nozzle assembly (14) is located lower than the base flange (55) and the catcher cup (15) is located higher than the base flange (55), and disposing the abrasive nozzle assembly (14) so as to be located closer to the central axis of the elongated member (51) than the catcher cup (15) is, and cutting off an other-lateral-side portion of the base flange (55) and a lower end portion of the web (54) that are located at the one end portion of the elongated member (51);
locating the catcher cup (15) at one lateral side of the web, after locating the abrasive nozzle assembly (14) at the other lateral side of the web (54), and disposing the abrasive nozzle assembly (14) and the catcher cup (15) such that the central axis thereof is parallel to an upper surface of the cap flange (53) and a lower surface of the base flange (55), and cutting off a portion of the web that is located at the one end portion of the elongated member;
disposing the abrasive nozzle assembly (14) and the catcher cup (15) at the one lateral side of the elongated member (51) such that the abrasive nozzle assembly (14) is located lower than the cap flange (53) and the catcher cup (15) is located higher than the cap flange (53), and disposing the abrasive nozzle assembly (14) and the catcher cup (15) such that the central axis thereof is parallel to a one-lateral-side surface and an other-lateral-side surface of the web (54), and cutting off both corner portions of the cap flange (53) that are located at the one end portion of the elongated member (51); and
disposing the abrasive nozzle assembly (14) and the catcher cup (15) at the one lateral side of the elongated member (51) such that the abrasive nozzle assembly (14) is located higher than the cap flange (53) and the catcher cup (15) is located lower than the cap flange (53), and disposing the abrasive nozzle assembly (14) and the catcher cup (15) such that the central axis thereof is parallel to the one-lateral-side surface and the other-lateral-side surface of the web (54), and cutting off a remaining portion of the cap flange (53) that is located at the one end portion of the elongated member (51).

3. A stringer manufacturing method for machining one end portion of an elongated member (71) that is provided with a cap flange (73), a web (74), and a base flange (75) and that has a T-shape in a front view into a desired shape to obtain a desired stringer (72),
wherein the one end portion of the elongated member (71) is machined into a desired shape by using a vertical articulated robot (1) that has at least 6 axes and that has, at the tip of an arm (13), an abrasive nozzle assembly (14) that injects ultrahigh-pressure water containing abrasive and a catcher cup (15) that recovers the ultrahigh-pressure water injected from the abrasive nozzle assembly (14),
the stringer manufacturing method comprising the steps of:
disposing the abrasive nozzle assembly (14) and the catcher cup (15) at one lateral side of the elongated member (71) such that the abrasive nozzle assembly (14) is located lower than the base flange (75) and the catcher cup (15) is located higher than the base flange (75), and disposing the abrasive nozzle assembly (14) so as to be located closer to the central axis of the elongated member (71) than the catcher cup (15) is, and cutting off a one-lateral-side portion of the base flange (75) and a lower end portion of the web (74) that are located at the one end portion of the elongated member (71);
disposing the abrasive nozzle assembly (14) and the catcher cup (15) at the other lateral side of the elongated member (71) such that the abrasive nozzle assembly (14) is located lower than the base flange (75) and the catcher cup (15) is located higher than the base flange (75), and disposing the abrasive nozzle assembly (14) so as to be located closer to the central axis of the elongated member (71) than the catcher cup (15) is, and cutting off an other-lateral-side portion of the base flange (75) and a lower end portion of the web (74) that are located at the one end portion of the elongated member (71);
locating the catcher cup (15) at one lateral side of the web (74), locating the abrasive nozzle assembly (14) at the other lateral side of the web (74), and disposing the abrasive nozzle assembly (14) and the catcher cup (15) such that the central axis thereof is parallel to an upper surface of the cap flange (73) and a lower surface of the base flange (75), and cutting off a portion of the web (74) that is located at the one end portion of the elongated member (71); and
disposing the abrasive nozzle assembly (14) and the catcher cup (15) at the one lateral side of the elongated member (71) such that the abrasive nozzle assembly (14) is located higher than the cap flange (73) and the catcher cup (15) is located lower than the cap flange (73), and disposing the abrasive nozzle assembly (14) and the catcher cup (15) such that the central axis thereof is parallel to a one-lateral-side surface and an other-lateral-side surface of the web (74), and cutting off a portion of the cap flange (73) that is located at the one end portion of the elongated member (71).

4. A stringer manufacturing method according to claim 1, 2 or 3, wherein a space adjustment mechanism that adjusts the space between the abrasive nozzle assembly (14) and the catcher cup (15) so as to maintain the space between the catcher cup (15) and the elongated member (21;51;71) constant is further provided.

## Patentansprüche

1. Ein Verfahren zum Herstellen eines Längsspants (Stringer) zum Bearbeiten eines Endabschnitts eines länglichen Elements (21), das mit einem Abdeckflansch (23), einem Steg (24) und einem Basisflansch (25) versehen ist und das eine umgekehrte T-Form in einer Vorderansicht besitzt, in eine gewünschte Form, um einen gewünschten Längsspant (Stringer) (22;32) zu erhalten,
wobei der eine Endabschnitt des länglichen Elements (21) in eine gewünschte Form bearbeitet wird, indem ein vertikaler beweglicher Roboter (1) verwendet wird, der mindestens sechs Achsen besitzt und der an dem Außenende eines Arms (13) eine Abrasionsdüsenanordnung (14), die Abrasivstoff enthaltendes Wasser mit ultrahohem Druck und einspritzt, und einen Auffangbecher (15), der das Wasser mit ultrahohem Druck, das von der Abrasionsdüsenanordnung (14) eingespritzt wird, zurückgewinnt, hat,
wobei das Verfahren zum Herstellen eines Längsspants die folgenden Schritte aufweist:
Anordnen der Abrasionsdüsenanordnung (14) und des Fangbechers (15) an einer lateralen Seite des länglichen Elements (21) derart, dass die Abrasionsdüsenanordnung (14) sich an einer höheren Position befindet als der Abdeckflansch (23) und der Fangbecher (15) sich an einer tieferen Position befindet als der Abdeckflansch (23), und Anordnen der Abrasionsdüsenanordnung (14) so, dass sie sich näher an der Mittelachse des länglichen Elements (21) befindet als der Fangbecher (15), und Abtrennen eines lateralen Seitenabschnitts des Abdeckflansches (23) und eines oberen Endabschnitts des Stegs (24), die sich an dem einen Endabschnitt des länglichen Elements (21) befinden,
Anordnen der Abrasionsdüsenanordnung (14) und des Fangbechers (15) an der anderen lateralen Seite des länglichen Elements (21) derart, dass die Abrasionsdüsenanordnung (14) sich an einer höheren Position befindet als der Abdeckflansch (23), und der Fangbecher (15) sich an einer tieferen Position befindet als der Abdeckflansch (23), und Anordnen der Abrasionsdüsenanordnung (14) so, dass sie sich näher an der Mittelachse des länglichen Elements (21) befindet als der Fangbecher (25), und Abtrennen eines anderen lateralen Seitenabschnitts des Abdeckflansches (23) und eines oberen Endabschnitts des Stegs (24), die sich an dem einen Endabschnitt des länglichen Elements (21) befinden, und
Anordnen des Fangbechers (15) an einer lateralen Seite des Stegs (24), nachdem die Abrasionsdüsenanordnung (14) an der anderen lateralen Seite des Stegs (24) platziert wurde, und Anordnen der Abrasionsdüsenanordnung (14) und des Fangbechers (15) derart, dass die Mittelachse davon parallel zu einer oberen Oberfläche des Abdeckflansches (23) und einer unteren Oberfläche des Basisflansches (25) ist, und Abtrennen eines Abschnitts des Stegs (24), der sich an dem einen Endabschnitt des länglichen Elements (21) befindet.

2. Ein Verfahren zum Herstellen eines Längsspants (Stringer) zum Bearbeiten eines Endabschnitts eines länglichen Elements (51), das mit einem Abdeckflansch (53), einem Steg (54) und einem Basisflansch (55) versehen ist und das eine I-Form in einer Vorderansicht besitzt, in eine gewünschte Form, um einen gewünschten Längsspant (Stringer) (52) zu erhalten,
wobei der eine Endabschnitt des länglichen Elements (51) in eine gewünschte Form bearbeitet wird, indem ein vertikaler beweglicher Roboter (1) verwendet wird, der mindestens sechs Achsen besitzt und der an dem Außenende eines Arms (13) eine Abrasionsdüsenanordnung (14) hat, die Abrasivstoff enthaltendes Wasser mit ultrahohem Druck einspritzt, und einen Fangbecher (15), der das Wasser mit ultrahohem Druck, das von der Abrasionsdüsenanordnung (14) eingespritzt wird, zurückgewinnt, hat,
wobei das Verfahren zum Herstellen eines Längsspants die folgenden Schritte aufweist:
Anordnen der Abrasionsdüsenanordnung (14) und des Fangbechers (15) an einer lateralen Seite des länglichen Elements (51) derart, dass sich die Abrasionsdüsenanordnung an einer tieferen Position befindet als der Basisflansch (55) und der Fangbecher (15) sich an einer höheren Position befindet als der Basisflansch (55), und Anordnen der Abrasionsdüsenanordnung (14) so, dass sie sich näher an der Mittelachse des länglichen Elements (51) befindet als der Fangbecher (15), und Abtrennen eines lateralen Seitenabschnitts des Basisflansches (55) und eines unteren Endabschnitts des Stegs (54), die sich an dem einen Endabschnitt des länglichen Elements (51) befinden,
Anordnen der Abrasionsdüsenanordnung (14) und des Fangbechers (15) an der anderen lateralen Seite des länglichen Elements (51) derart, dass die Abrasionsdüsenanordnung (14) sich an einer tieferen Position befindet als der Basisflansch (55) und der Fangbecher (15) sich an einer höheren Position befindet als der Basisflansch (55), und Anordnen der Abrasionsdüsenanordnung (14) so, dass sie sich näher an der Mittelachse des länglichen Elements (51) befindet als der Fangbecher (15), und Abtrennen eines anderen lateralen Seitenabschnitts des Basisflansches (55) und eines unteren Endabschnitts des Stegs (54), die sich an dem einen Endabschnitt des länglichen Elements (51) befinden,
Platzieren des Fangbechers an einer lateralen Seite des Stegs, nachdem die Abrasionsdüsenanordnung (14) an der anderen lateralen Seite des Stegs (54) platziert wurde, und Anordnen der Abrasionsdüsenanordnung (14) und des Fangbechers (15) derart, dass die Mittelachse davon parallel zu einer oberen Oberfläche des Abdeckflansches (53) und einer unteren Oberfläche des Basisflansches (55) ist, und Abtrennen eines Abschnitts des Stegs, der sich an dem einen Endabschnitt des länglichen Elements befindet,
Anordnen der Abrasionsdüsenanordnung (14) und des Fangbechers (15) an der einen lateralen Seite des länglichen Elements (51) derart, dass die Abrasionsdüsenanordnung (14) sich an einer tieferen Position befindet als der Abdeckflansch (53) und der Fangbecher (15) sich an einer höheren Position befindet als der Abdeckflansch (53), und Anordnen der Abrasionsdüsenanordnung (14) und des Fangbechers (15) derart, dass die Mittelachse davon parallel zu einer lateralen Seitenoberfläche und einer anderen lateralen Seitenoberfläche des Stegs (54) ist, und Abtrennen von beiden Eckabschnitten des Abdeckflansches (53), die sich an dem einen Endabschnitt des länglichen Elements (51) befinden, und
Anordnen der Abrasionsdüsenanordnung (14) und des Fangbechers (15) an der einen lateralen Seite des länglichen Elements (51) derart, dass sich die Abrasionsdüsenanordnung (14) an einer höheren Position befindet als der Abdeckflansch (53) und der Fangbecher (15) sich an einer tieferen Position befindet als der Abdeckflansch (53), und Anordnen der Abrasionsdüsenanordnung (14) und des Fangbechers (15) derart, dass die Mittelachse davon parallel zu der einen lateralen Seitenoberfläche und der anderen lateralen Seitenoberfläche des Stegs (54) ist, und Abtrennen eines verbleibenden Abschnitts des Abdeckflansches (53), der sich an dem einen Endabschnitt des länglichen Elements (51) befindet.

3. Ein Verfahren zum Herstellen eines Längsspants (Stringer) zum Bearbeiten eines Endabschnitts eines länglichen Elements (71), das mit einem Abdeckflansch (73), einem Steg (74) und einem Basisflansch (75) versehen ist und das eine T-Form in einer Vorderansicht besitzt, in eine gewünschte Form, um einen gewünschten Längsspant (Stringer) (72) zu erhalten,
wobei der eine Endabschnitt des länglichen Elements (71) in eine gewünschte Form bearbeitet wird, indem ein vertikaler beweglicher Roboter (1) verwendet wird, der mindesten sechs Achsen besitzt und der an dem Außenende eines Arms (13) eine Abrasionsdüsenanordnung (14), die Abrasivstoff enthaltendes Wasser mit ultrahohem Druck einspritzt, und einen Fangbecher (15), der das Wasser mit ultrahohem Druck, das von der Abrasionsdüsenanordnung (14) eingespritzt wird, zurückgewinnt, hat,
wobei das Verfahren zum Herstellen eines Längsspants (Stringer) die folgenden Schritte aufweist:
Anordnen der Abrasionsdüsenanordnung (14) und des Fangbechers (15) an einer lateralen Seite des länglichen Elements (71) derart, dass die Abrasionsdüsenanordnung (14) sich an einer tieferen Position befindet als der Basisflansch (75) und der Fangbecher (15) sich an einer höheren Position befindet als der Basisflansch (75), und Anordnen der Abrasionsdüsenanordnung (14) so, dass sie sich näher an der Mittelachse des länglichen Elements (71) befindet als der Fangbecher (15), und Abtrennen eines lateralen Seitenabschnitts des Basisflansches (75) und eines unteren Endabschnitts des Stegs (74), die sich an dem einen Endabschnitt des länglichen Elements (71) befinden,
Anordnen der Abrasionsdüsenanordnung (14) und des Fangbechers (15) an der anderen lateralen Seite des länglichen Elements (71) derart, dass sich die Abrasionsdüsenanordnung (14) an einer tieferen Position befindet als der Basisflansch (75) und der Fangbecher (15) sich an einer höheren Position befindet als der Basisflansch (75), und Anordnen der Abrasionsdüsenanordnung (14) derart, dass sie sich näher an der Mittelachse des länglichen Elements (71) befindet als der Fangbecher (15), und Abtrennen eines anderen lateralen Seitenabschnitts des Basisflansches (75) und eines unteren Endabschnitts des Stegs (74), die sich an dem einen Endabschnitt des länglichen Elements (71) befinden,
Platzieren des Fangbechers (15) an einer lateralen Seite des Stegs (74), Platzieren der Abrasionsdüsenanordnung (14) an der anderen lateralen Seite des Stegs (74), und Anordnen der Abrasionsdüsenanordnung und des Fangbechers (15) derart, dass die Mittelachse davon parallel zu einer oberen Oberfläche des Abdeckflansches (73) und einer unteren Oberfläche des Basisflansches (75) ist, und Abtrennen eines Abschnitts des Stegs (74), der sich an dem einen Endabschnitt des länglichen Elements (71) befindet, und
Anordnen der Abrasionsdüsenanordnung (14) und des Fangbechers (15) an der einen lateralen Seite des länglichen Elements (71) derart, dass die Abrasionsdüsenanordnung (14) sich an einer höheren Position befindet als der Abdeckflansch (73) und der Fangbecher (15) sich an einer tieferen Position befindet als der Abdeckflansch (73), und Anordnen der Abrasionsdüsenanordnung (14) und des Fangbechers (15) derart, dass die Mittelachse davon parallel zu einer lateralen Seitenoberfläche und einer anderen lateralen Seitenoberfläche des Stegs (74) ist, und Abtrennen eines Abschnitts des Abdeckflansches (73), der sich an dem einen Endabschnitt des länglichen Elements (71) befindet.

4. Ein Verfahren zum Herstellen eines Längsspants (Stringer) gemäß Anspruch 1, 2 oder 3, wobei außerdem ein Raumeinstellmechanismus vorgesehen ist, der den Raum zwischen der Abrasionsdüsenanordnung (14) und dem Fangbecher (15) einstellt, um den Raum zwischen dem Fangbecher (15) und dem länglichen Element (21; 51; 71) konstant zu halten.

## Revendications

1. Procédé de fabrication d'une poutrelle pour usiner une partie d'extrémité d'un élément (21) oblong, qui est pourvu d'une membrure (23) supérieure, d'une âme (24) et d'une membrure (25) inférieure et qui a une forme en T inversé dans une vue en élévation, en une forme souhaitée pour obtenir une poutrelle (22; 32) souhaitée,
dans lequel on usine la partie d'extrémité de l'élément (21) oblong en une forme souhaitée en utilisant un robot (1) articulé vertical, qui a au moins 6 axes et qui a, à la pointe d'un bras (13), un ensemble (14) de buse abrasive, qui injecte de l'eau sous une pression ultra haute contenant de l'abrasif, et une coupelle (15) de recueillement, qui recueille l'eau sous pression ultra haute injectée par l'ensemble (14) de buse abrasive,
le procédé de fabrication d'une poutrelle comprenant les stades, dans lesquels :
on dispose l'ensemble (14) de buse abrasive et la coupelle (15) de recueillement d'un côté latéral de l'élément (21) oblong, de manière à ce que l'ensemble (14) de buse abrasive soit placé plus haut que la membrure (23) supérieure et de manière à ce que la coupelle (15) de recueillement soit placée plus bas que la membrure (23) supérieure, et on dispose l'ensemble (14) de buse abrasive, de manière à ce qu'il soit placé plus près de l'axe central de l'élément (21) oblong que ce n'est le cas de la coupelle (15) de recueillement, et on coupe une partie d'un côté latéral de la membrure (23) supérieure et une partie d'extrémité supérieure de l'âme (24), qui se trouvent à la une partie d'extrémité de l'élément (21) oblong ;
on dispose l'ensemble (14) de buse abrasive et la coupelle (15) de recueillement de l'autre côté latéral de l'élément (21) oblong, de manière à ce que l'ensemble (14) de buse abrasive soit placé plus haut que la membrure (23) supérieure et de manière à ce que la coupelle (15) de recueillement soit placée plus bas que la membrure (23) supérieure, et on dispose l'ensemble (14) de buse abrasive, de manière à ce qu'il soit plus près de l'axe central de l'élément (21) oblong que ce n'est le cas de la coupelle (15) de recueillement, et on coupe une autre partie de côté latéral de la membrure (23) supérieure et une partie d'extrémité supérieure de l'âme (24), qui sont à la une partie d'extrémité de l'élément (21) oblong et
on place la coupelle (15) de recueillement d'un côté latéral de l'âme (24), après avoir placé l'ensemble (14) de buse abrasive de l'autre côté latéral de l'âme (24), et on dispose l'ensemble (14) de buse abrasive et la coupelle (15) de recueillement, de manière à ce que leur axe central soit parallèle à une surface supérieure de la membrure (23) supérieure et à une surface inférieure de la membrure (25) inférieure, et on coupe une partie de l'âme (24), qui est placée à la une partie d'extrémité de l'élément (21) oblong.

2. Procédé de fabrication d'une poutrelle pour usiner une partie d'extrémité d'un élément (51) oblong, qui est pourvu d'une membrure (53) supérieure, d'une âme (54) et d'une membrure (55) inférieure et qui a une forme en I inversé dans une vue en élévation, en une forme souhaitée pour obtenir une poutrelle (52) souhaitée,
dans lequel on usine la partie d'extrémité de l'élément (51) oblong en une forme souhaitée en utilisant un robot (1) articulé vertical, qui a au moins 6 axes et qui a, à la pointe d'un bras (13), un ensemble (14) de buse abrasive, qui injecte de l'eau sous une pression ultra haute contenant de l'abrasif, et une coupelle (15) de recueillement, qui recueille l'eau sous pression ultra haute injectée par l'ensemble (14) de buse abrasive,
le procédé de fabrication d'une poutrelle comprenant les stades, dans lesquels :
on dispose l'ensemble (14) de buse abrasive et la coupelle (15) de recueillement d'un côté latéral de l'élément (51) oblong, de manière à ce que l'ensemble (14) de buse abrasive soit placé plus bas que la membrure (55) inférieure et de manière à ce que la coupelle (15) de recueillement soit placée plus haut que la membrure (55) inférieure, et on dispose l'ensemble (14) de buse abrasive, de manière à ce qu'il soit placé plus près de l'axe central de l'élément (51) oblong que ce n'est le cas de la coupelle (15) de recueillement, et on coupe une partie d'un côté latéral de la membrure (55) inférieure et une partie d'extrémité inférieure de l'âme (54), qui se trouvent à la une partie d'extrémité de l'élément (51) oblong ;
on dispose l'ensemble (14) de buse abrasive et la coupelle (15) de recueillement de l'autre côté latéral de l'élément (51) oblong, de manière à ce que l'ensemble (14) de buse abrasive soit placé plus bas que la membrure (55) inférieure et de manière à ce que la coupelle (15) de recueillement soit placée plus haut que la membrure (55) inférieure, et on dispose l'ensemble (14) de buse abrasive, de manière à ce qu'il soit plus près de l'axe central de l'élément (51) oblong que ce n'est le cas de la coupelle (15) de recueillement, et on coupe une autre partie de côté latéral de la membrure (55) inférieure et une partie d'extrémité inférieure de l'âme (54), qui sont à la une partie d'extrémité de l'élément (51) oblong ;
on place la coupelle (15) de recueillement d'un côté latéral de l'âme (54), après avoir placé l'ensemble (14) de buse abrasive de l'autre côté latéral de l'âme (54), et on dispose l'ensemble (14) de buse abrasive et la coupelle (15) de recueillement, de manière à ce que leur axe central soit parallèle à une surface supérieure de la membrure (53) supérieure et à une surface inférieure de la membrure (55) inférieure, et on coupe une partie de l'âme, qui est placée à la une partie d'extrémité de l'élément oblong ;
on dispose l'ensemble (14) de buse abrasive et la coupelle (15) de recueillement d'un côté latéral de l'élément (51) oblong, de manière à ce que l'ensemble (14) de buse abrasive soit placé plus bas que la membrure (53) supérieure et de manière à ce que la coupelle (15) de recueillement soit placée plus haut que la membrure (53) supérieure, et on dispose l'ensemble (14) de buse abrasive et la coupelle (15) de recueillement, de manière à ce que leur axe central soit parallèle à une surface de côté latéral et à une autre surface de côté latéral de l'âme (54), et on coupe les deux parties de coin de la membrure (53) supérieure, qui sont à la une partie d'extrémité de l'élément (51) oblong et
on dispose l'ensemble (14) de buse abrasive et la coupelle (15) de recueillement du côté latéral de l'élément (51) oblong, de manière à ce que l'ensemble (14) de buse abrasive soit placé plus haut que la membrure (53) supérieure et de manière à ce que la coupelle (15) de recueillement soit placée plus bas que la membrure (53) supérieure, et on dispose l'ensemble (14) de buse abrasive et la coupelle (15) de recueillement, de manière à ce que leur axe central soit parallèle à la une surface de côté latéral et à l'autre surface de côté latéral de l'âme (54), et on coupe une partie restante de la membrure (53) supérieure, qui est à la une partie d'extrémité de l'élément (51) oblong.

3. Procédé de fabrication d'une poutrelle pour usiner une partie d'extrémité d'un élément (71) oblong, qui est pourvu d'une membrure (73) supérieure, d'une âme (24) et d'une membrure (75) inférieure et qui a une forme en T dans une vue en élévation, en une forme souhaitée pour obtenir une poutrelle (72) souhaitée,
dans lequel on usine la partie d'extrémité de l'élément (71) oblong en une forme souhaitée en utilisant un robot (1) articulé vertical, qui a au moins 6 axes et qui a, à la pointe d'un bras (13), un ensemble (14) de buse abrasive, qui injecte de l'eau sous une pression ultra haute contenant de l'abrasif, et une coupelle (15) de recueillement, qui recueille l'eau sous pression ultra haute injectée par l'ensemble (14) de buse abrasive,
le procédé de fabrication d'une poutrelle comprenant les stades, dans lesquels :
on dispose l'ensemble (14) de buse abrasive et la coupelle (15) de recueillement d'un côté latéral de l'élément (71) oblong, de manière à ce que l'ensemble (14) de buse abrasive soit placé plus bas que la membrure (75) inférieure et de manière à ce que la coupelle (15) de recueillement soit placée plus haut que la membrure (75) inférieure, et on dispose l'ensemble (14) de buse abrasive, de manière à ce qu'il soit placé plus près de l'axe central de l'élément (71) oblong que ce n'est le cas de la coupelle (15) de recueillement, et on coupe une partie de côté latéral de la membrure (75) inférieure et une partie d'extrémité inférieure de l'âme (74), qui se trouvent à la une partie d'extrémité de l'élément (71) oblong ;
on dispose l'ensemble (14) de buse abrasive et la coupelle (15) de recueillement de l'autre côté latéral de l'élément (71) oblong, de manière à ce que l'ensemble (14) de buse abrasive soit placé plus bas que la membrure (75) inférieure et de manière à ce que la coupelle (15) de recueillement soit placée plus haut que la membrure (75) inférieure, et on dispose l'ensemble (14) de buse abrasive, de manière à ce qu'il soit plus près de l'axe central de l'élément (71) oblong que ce n'est le cas de la coupelle (15) de recueillement, et on coupe une autre partie de côté latéral de la membrure (75) inférieure et une partie d'extrémité inférieure de l'âme (74), qui sont à la une partie d'extrémité de l'élément (71) oblong ;
on place la coupelle (15) de recueillement d'un côté latéral de l'âme (74), on place l'ensemble (14) de buse abrasive de l'autre côté latéral de l'âme (74) et on dispose l'ensemble (14) de buse abrasive et la coupelle (15) de recueillement, de manière à ce que leur axe central soit parallèle à une surface supérieure de la membrure (73) supérieure et à une surface inférieure de la membrure (75) inférieure, et on coupe une partie de l'âme (74), qui est placée à la une partie d'extrémité de l'élément (71) oblong ; et
on dispose l'ensemble (14) de buse abrasive et la coupelle (15) de recueillement de l'autre côté latéral de l'élément (71) oblong, de manière à ce que l'ensemble (14) de buse abrasive soit placé plus haut que la membrure (73) supérieure et de manière à ce que la coupelle (15) de recueillement soit placée plus bas que la membrure (73) supérieure, et on dispose l'ensemble (14) de buse abrasive et la coupelle (15) de recueillement, de manière à ce que leur axe central soit parallèle à une surface de côté latéral et à une autre surface de côté latéral de l'âme (74), et on coupe une partie de la membrure (73) supérieure, qui est à la une partie d'extrémité de l'élément (71) oblong.

4. Procédé de fabrication d'une poutrelle suivant la revendication 1, 2 ou 3, dans lequel il est prévu, en outre, un mécanisme de réglage de la distance, qui règle la distance entre l'ensemble (14) de buse abrasive et la coupelle (15) de recueillement, de manière à maintenir constant la distance entre la coupelle (15) de recueillement et l'élément (21; 51; 71) oblong.
